# EUROPEAN PATENT SPECIFICATION

(11) **EP 4 173 840 B1**
(45) Date of publication and mention of the grant of the patent: **31.01.2024**
(21) Application number: 22195535.4
(22) Date of filing: 14.09.2022
(51) Int. Cl.: B60B 1/02, B60B 1/04

(54) **WIRE-SPOKE WHEEL**
DRAHTSPEICHENRAD
ROUE DE PROJECTION DE FIL

(30) Priority: 27.10.2021 JP 2021175438
(43) Date of publication of application: 03.05.2023
(73) Proprietor: Yamaha Hatsudoki Kabushiki Kaisha, Iwata-shi, Shizuoka 438-8501 (JP)
(72) Inventor: NIIMI, Hiroshi, Iwata-shi, 438-8501 (JP); YAMAGUCHI, Masaya, Iwata-shi, 438-8501 (JP)
(74) Representative: Studio Torta S.p.A.

(56) References cited:
- EP-A2- 1 604 838
- JP-A- S59 192 604
- US-A- 4 618 187

## Description

The present disclosure relates to a wire-spoke wheel.

As a type of wheels for use in motorcycles and other vehicles, wire-spoke wheels are known in which a rim and a hub are linked by a plurality of wire spokes. Wire-spoke wheels have the advantage of good shock absorption. A wire-spoke wheel is disclosed in Japanese Laid-Open Patent Publication No. 2012-232658 (hereinafter "Patent Document 1"), for example.

The inventors have sought to further improve shock absorption of a wire-spoke wheel by lengthening its wire spokes. However, because the length of a wire spoke is essentially determined by the rim diameter, it is difficult to greatly improve the shock absorption by lengthening the wire spokes while the rim diameter remains the same.

The present disclosure has been made in view of the above problem, and an objective thereof is to improve shock absorption of a wire-spoke wheel.

The present specification discloses wire-spoke wheels as recited in the following Claims.

### [Claim 1]

A wire-spoke wheel comprising:
an annular rim;
a hub having a hole in which a wheel shaft is inserted;
a plurality of wire spokes linking the rim and the hub together, the plurality of wire spokes each including a first end that is connected to the rim and a second end that is connected to the hub, wherein,
in a plan view as viewed along a wheel axis direction, regarding each wire spoke,
   an imaginary line connecting the first end of the wire spoke and a center of the hole defines a first imaginary line; an imaginary line being orthogonal to the first imaginary line and passing through a center of the hole defines a second imaginary line; and when the hub is divided into two regions by the second imaginary line, one of the two regions that is located closer to the first end of the wire spoke defines a first region and the other of the two regions defines a second region, wherein
   the second end of the wire spoke is connected to the hub in the second region of the hub.

A wire-spoke wheel according to an embodiment of the present invention has a configuration that allows the wire spokes to be longer than conventional. Specifically, in a plan view as viewed along a wheel axis direction, the following may be assumed regarding each wire spoke: an imaginary line connecting the rim-end (first end) of the wire spoke and the center of the hole (wheel-shaft insertion hole) in the hub defines a first imaginary line; an imaginary line being orthogonal to the first imaginary line and passing through a center of the hole defines a second imaginary line; and the second imaginary line divides the hub into two regions. Herein, assuming that one of the two regions that is located closer to the first end of the wire spoke defines a first region and that the other region defines a second region, the hub-end (second end) of the wire spoke is connected to the hub in the second region of the hub.

Because of the wire-spoke wheel having such a configuration (i.e., each wire spoke is disposed so as to extend from the rim to the hub and beyond the second imaginary line), the wire spokes can be made longer than conventional, whereby energy absorption by the wire spokes increases, thus resulting in an improved shock absorption. Therefore, a straddled vehicle including a wire-spoke wheel according to an embodiment of the present invention provides better riding comfort on poor terrain and uneven road surfaces. As energy absorption increases, the input occurring at the fastening site of each wire spoke decreases, which reduces loosening of the fastening site and reduces the frequency of maintenance.

### [Claim 2]

The wire-spoke wheel of Claim 1, wherein each of the plurality of wire spokes has a length which is 60% or more of the rim diameter.

When the length of each wire spoke is 60% or more of the rim diameter, a sufficiently high shock absorption can be obtained.

### [Claim 3]

The wire-spoke wheel of Claim 1 or 2, wherein,
the hub includes an inner cylindrical portion defining the hole, an outer cylindrical portion being located outward of the inner cylindrical portion along a wheel radius direction and surrounding the inner cylindrical portion, and an interconnecting portion connecting the inner cylindrical portion and the outer cylindrical portion.

### [Claim 4]

The wire-spoke wheel of Claim 3, wherein,
each of the plurality of wire spokes penetrates an interior of the hub from a portion to another portion of the outer cylindrical portion of the hub, and the second end is connected to the hub at the other portion.

Given the structure of the hub which includes the inner cylindrical portion and the outer cylindrical portion, adopting the configuration where, e.g., each wire spoke penetrates the interior of the hub from a portion to another portion of the outer cylindrical portion of the hub allows the hub-end (second end) of the wire spoke to be connected to the hub in the second region.

### [Claim 5]

The wire-spoke wheel of Claim 4, wherein an opening is made in the portion of the outer cylindrical portion of the hub, and the first end of each wire spoke is located outward of the opening along the wheel axis direction.

### [Claim 6]

The wire-spoke wheel of Claim 4 or 5, further comprising a plurality of nipples to fasten the respective second ends of the plurality of wire spokes to the hub, wherein,
in a plan view as viewed along the wheel axis direction, the plurality of nipples do not protrude from the outer cylindrical portion of the hub.

When the second ends of the wire spokes are fastened to the hub via nipples, it is preferable from a design standpoint that, in a plan view as viewed along the wheel axis direction, the nipples do not protrude from the outer cylindrical portion of the hub.

[Claim 7]

The wire-spoke wheel of Claim 1 or 2, wherein,
the hub includes an inner cylindrical portion defining the hole and a pair of flange portions extending outward along a wheel radius direction from the inner cylindrical portion.

### [Claim 8]

The wire-spoke wheel of Claim 7, wherein,
each of the pair of flange portions includes an outer peripheral subportion, and an inner subportion that is located inward of the outer peripheral subportion along the wheel radius direction; and
the second end of each of the plurality of wire spokes is connected to the hub in the inner subportion of the pair of flange portions.

Given the structure of the hub which includes the inner cylindrical portion and the pair of flange portions, adopting the configuration where, e.g., the second end of each wire spoke is connected to the hub at the inner subportion of the flange portion allows the hub-end (second end) of the wire spoke to be connected to the hub in the second region.

### [Claim 9]

The wire-spoke wheel of Claim 8, wherein, when viewed in a plan view from the wheel axis direction, each wire spoke extends from the first end to the second end thereof, so as to pass inward of the second end of at least another wire spoke along the wheel radius direction.

According to an embodiment of the present invention, shock absorption of a wire-spoke wheel can be improved.

FIG. **1** is a perspective view schematically showing a wire-spoke wheel **100** according to an embodiment of the present invention.
FIG. **2** is a side view schematically showing the wire-spoke wheel **100.**
FIG. **3** is a cross-sectional view schematically showing the wire-spoke wheel **100,** illustrating a cross section parallel to a wheel axis direction **D1** and a wheel radius direction **D2.**
FIG. **4** is a plan view schematically showing a wire spoke **30.**
FIG. **5** is a plan view schematically showing a nipple **40.**
FIG. **6** is a side view schematically showing the wire-spoke wheel **100.**
FIG. **7** is a cross-sectional view schematically showing the neighborhood of a spoke connection site **22b.**
FIG. **8** is a graph showing a relationship (load-displacement curve) between the load acting on each wire spoke and the displacement of the wire spoke, with respect to Example 1 and Comparative Example.
FIG. **9** is a side view schematically showing another wire-spoke wheel **200** according to an embodiment of the present invention.
FIG. **10** is a cross-sectional view schematically showing the wire-spoke wheel **200,** illustrating a cross section parallel to the wheel axis direction **D1** and the wheel radius direction **D2.**
FIG. **11** is a side view schematically showing the wire-spoke wheel **200.**

Hereinafter, with reference to the drawings, embodiments of the present invention will be described. Note that the present invention is not limited to the following embodiments.

### (Embodiment 1)

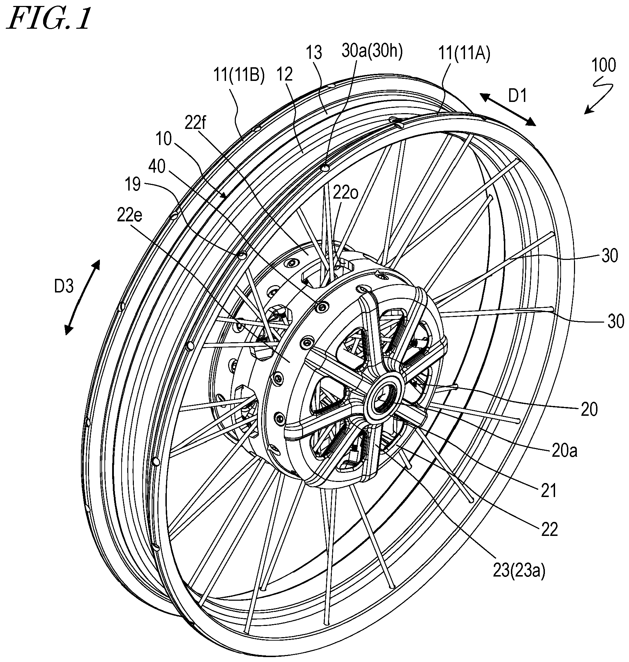

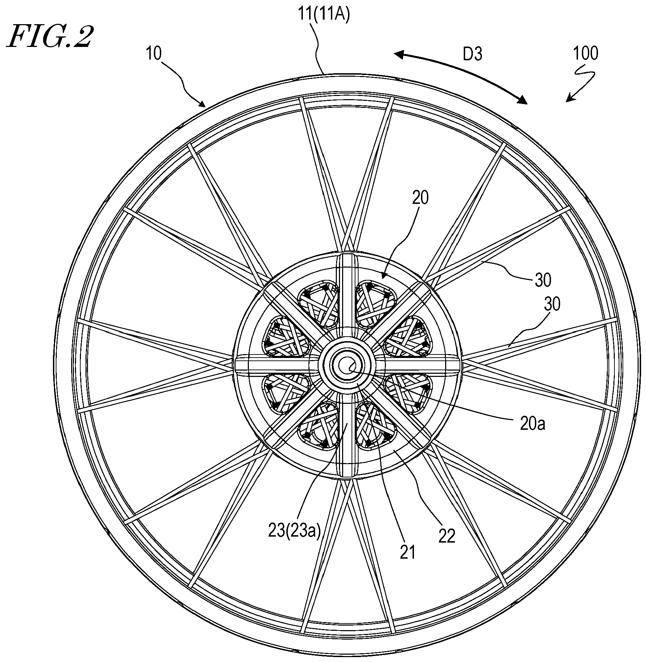

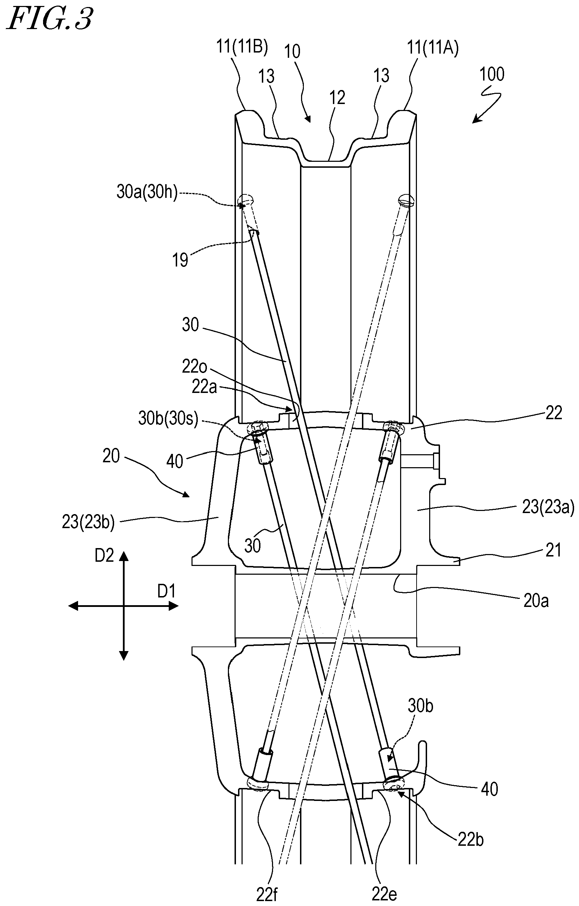

With reference to FIG. **1****,** FIG. **2****,** and FIG. **3****,** a wire-spoke wheel (hereinafter simply referred to as a "wheel") **100** according to the present embodiment will be described. FIG. **1** and FIG. **2** are a perspective view and a side view, respectively, schematically showing the wheel **100.** FIG. **3** is a cross-sectional view schematically showing the wheel **100,** illustrating a cross section that is parallel to a wheel axis direction **D1** and a wheel radius direction **D2.**

As shown in FIG. **1****,** FIG. **2****,** and FIG. **3****,** the wheel **100** includes a rim **10,** a hub **20,** and a plurality of wire spokes **30.**

The rim **10** has an annular shape, extending in a wheel circumference direction **D3.** A tire is mounted on the rim **10.** The rim **10** is made of a metal material (e.g., an aluminum alloy) . The rim **10** includes a pair of flange portions **11,** a well portion **12,** and a pair of bead seat portions **13.**

The pair of flange portions **11** are located at both ends of the wheel axis direction **D1** of the rim **10.** Regarding the pair of flange portions **11,** a flange portion **11A** that is located on the right side of the rim **10** will be referred to as the "right flange portion", whereas a flange portion **11B** that is located on the left side of the rim **10** will be referred to as the "left flange portion". The right flange portion **11A** and the left flange portion **11B** each extend outward along the wheel radius direction **D2.**

The well portion **12** is located in the middle of the wheel axis direction **D1** of the rim **10.** The well portion **12** is dented inward along the wheel radius direction **D2.**

The bead seat portions **13** are located between the right flange portion **11A** and the well portion **12,** and between the left flange portion **11A** and the well portion **12.** The bead seat portions **13** are portions that support bead portions of the tire.

The hub **20** is located in the center of the wheel **100.** The hub **20** includes a hole (wheel-shaft insertion hole) **20a** through which a wheel shaft is inserted. A direction that is parallel to the center axis of the wheel-shaft insertion hole **20a** is the wheel axis direction **D1.** The hub **20** is made of a metal material (e.g., an aluminum alloy).

In the present embodiment, the hub **20** includes an inner cylindrical portion **21,** an outer cylindrical portion **22,** and an interconnecting portion **23.** The inner cylindrical portion **21** is a barrel-shaped portion defining the wheel-shaft insertion hole **20a.** The outer cylindrical portion **22** is a barrel-shaped portion being located outward of the inner cylindrical portion **21** along the wheel radius direction **D2** and surrounding the inner cylindrical portion **21.**

The interconnecting portion **23** is a portion that connects the inner cylindrical portion **21** with the outer cylindrical portion **22.** The interconnecting portion **23** includes a right interconnecting portion **23a** that is located on the right side of the hub **20** and a left interconnecting portion **23b** that is located on the left side of the hub **20.** The right interconnecting portion **23a** extends radially from the right end of the inner cylindrical portion **21** to the right end of the outer cylindrical portion **22**. The left interconnecting portion **23b** extends radially from the left end of the inner cylindrical portion **21** to the left end of the outer cylindrical portion **22.** Note that the shape of the interconnecting portion **23** is not limited to the illustrated example. For example, the right interconnecting portion **23a** and the left interconnecting portion **23b** may each be shaped as a disk.

The region of the hub **20** that is surrounded by the inner cylindrical portion **21,** the outer cylindrical portion **22,** and the interconnecting portion **23** is a hollow space. In other words, the hub **20** has a hollow structure.

The plurality of wire spokes **30** link the rim **10** and the hub **20** together. The wire spokes **30** are made of a metal material (e.g., iron). In the illustrated example, the wheel **100** includes 32 wire spokes **30;** however, the number of wire spokes **30** is of course not limited thereto.

In the present specification, regarding both ends of each wire spoke **30,** an end **30a** that is connected to the rim **10** will be referred to as the "first end" or the "rim-end", whereas an end **30b** that is connected to the hub **20** will be referred to as the "second end" or the "hub-end". In the present embodiment, as shown in FIG. **3****,** the hub-ends **30b** of the wire spokes **30** are fastening to the hub **20** via nipples **40.**

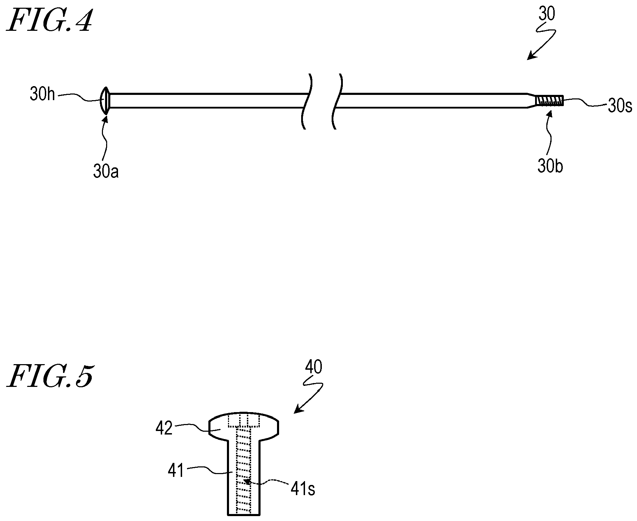

FIG. **4** and FIG. **5** are plan views showing a wire spoke **30** and a nipple **40,** respectively. As shown in FIG. **4****,** a spoke head **30h** with an increased diameter is formed at the rim-end **30a** of the wire spoke **30,** whereas an external thread **30s** is formed at the hub-end **30b.**

As shown in FIG. **5****,** the nipple **40** includes a stem **41** and a head **42** that is provided at one end of the stem **41.** The stem **41** has a barrel shape, with an internal thread **41s** being formed on the inner peripheral surface of the stem **41.**

As shown in FIG. **1** and FIG. **3****,** the flange portions **11** of the rim **10** include spoke holes **19** through which the wire spokes **30** can be inserted, such that the rim-ends **30a** of the wire spokes **30** are secured to the corresponding flange portions **11** of the rim **10** via the spoke heads **30h.** The hub-ends **30b** of the wire spokes **30** are fastened to the outer cylindrical portion **22** of the hub **20** as their external threads **30s** are screwed onto the internal threads **41s** of the nipples **40.**

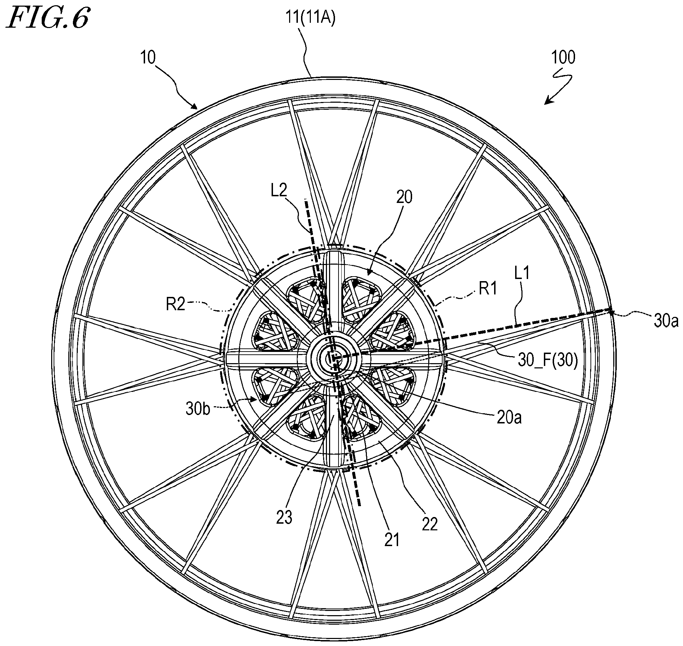

The wheel **100** according to the present embodiment has a configuration that allows the wire spokes **30** to be longer than conventional. Hereinafter, this configuration will be specifically described. In the following description, each wire spoke **30** will be discussed in a plan view as viewed along the wheel axis direction **D1.** FIG. **6** shows a side of the wheel **100** in a plan view drawn with particular attention to a certain wire spoke **30** (i.e., a wire spoke denoted as **"30_F"** in FIG. **6****)** .

Now, the following is assumed: an imaginary line **L1** connecting the rim-end (first end) **30a** of the wire spoke **30** and the center of the wheel-shaft insertion hole **20a** defines a "first imaginary line"; an imaginary line **L2** being orthogonal to the first imaginary line **L1** and passing through the center of the wheel-shaft insertion hole **20a** defines a "second imaginary line"; and the second imaginary line **L2** divides the hub **20** into two regions **R1** and **R2.** Herein, one **R1** of the two regions **R1** and **R2** that is located closer to the rim-end (first end) **30a** of the wire spoke **30** defines a "first region", while the other region **R2** defines a "second region".

As shown in FIG. **6****,** in the wheel **100** according to the present embodiment, the hub-end (second end) **30b** of the wire spoke **30** is connected to the hub **20** in the second region R2 of the hub **20.** More specifically, as shown in FIG. **3****,** the wire spoke **30** penetrates the interior of the hub **20** from a portion (hereinafter referred to as a "spoke introduction site") **22a** to another portion (hereinafter referred to as a "spoke connection site") **22b** of the outer cylindrical portion **22** of the hub **20.**

At the spoke introduction sites **22a** of the outer cylindrical portion **22,** openings **22o** through which the wire spokes **30** are passed are formed. The openings **22o** are located in substantially the middle of the outer cylindrical portion **22** of the hub **20** along the wheel axis direction **D1**. Therefore, it can be said that the rim-ends **30a** of the wire spokes **30** are located outward of the openings **22o** along the wheel axis direction **D1**. Although four wire spokes **30** are passed through one opening **22o** in the illustrated example, the relationship between the number of openings **22o** and the number of wire spokes **30** is not limited thereto. The shape of each opening **22o** is not limited to the illustrated example, either.

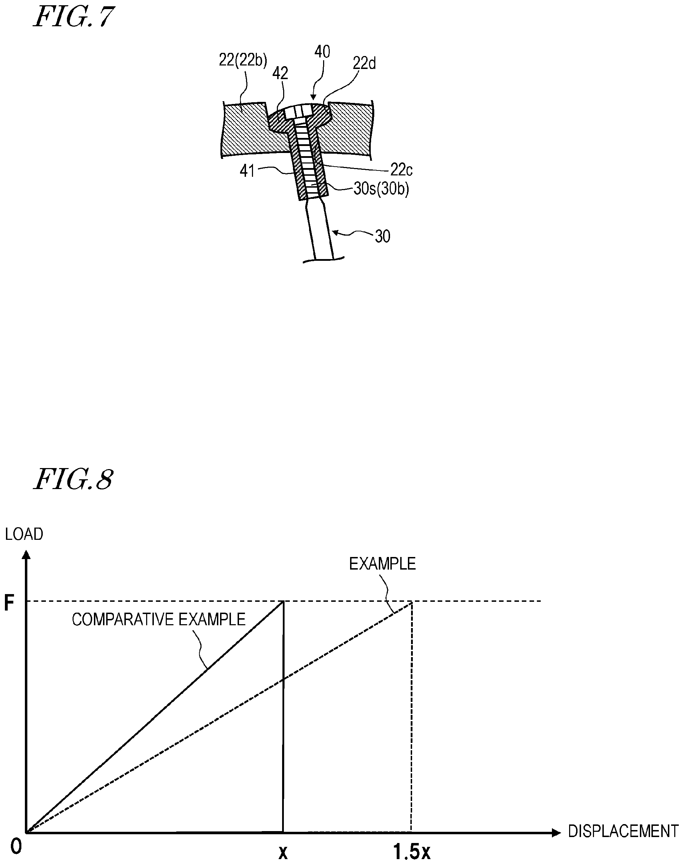

At each spoke connection site **22b** of the outer cylindrical portion **22,** the hub-end **30b** of the wire spoke **30** is connected to the hub **20.** FIG. **7** is a cross-sectional view showing the neighborhood of a spoke connection site **22b.** As shown in FIG. **7****,** a nipple hole **22c,** through which the stem **41** of the nipple **40** is inserted, and a recess **22d,** which is continuous with the nipple hole **22c** and in which the head **42** of the nipple **40** is accommodated, are formed at the spoke connection site **22b.**

In the present embodiment, in the outer peripheral surface of the outer cylindrical portion **22,** a pair of grooves **22e** and **22f** extending along the wheel circumference direction **D3** are formed. The spoke connection site **22b** corresponding to each wire spoke **30** is located in the groove **22e** or **22f.** A half of the plurality of wire spokes **30** have their rim-ends **30a** connected to the right flange portion **11A** and their hub-ends **30b** connected to a spoke connection site **22b** in the left groove **22f.** The other half of the wire spokes **30** have their rim-ends **30a** connected to the left flange portion **11B** and their hub-ends **30b** connected to a spoke connection site **22b** in the right groove **22e**.

As described above, in the wheel **100** according to the present embodiment, the hub-end (second end) **30b** of each wire spoke **30** is connected to the hub **20** in the second region **R2** of the hub **20.** In other words, each wire spoke **30** is disposed so as to extend from the rim **10** to the hub **20** and beyond the second imaginary line **L2.** Thus, the wire spokes **30** can be made longer than conventional, whereby energy absorption by the wire spokes **30** increases, thus resulting in an improved shock absorption. Therefore, a straddled vehicle including the wheel **100** according to the present embodiment provides better riding comfort on poor terrain and uneven road surfaces. As energy absorption increases, the input occurring at the fastening site of each wire spoke **30** decreases, which reduces loosening of the fastening site and reduces the frequency of maintenance.

As the wire spokes **30** become longer, energy absorption increases and shock absorption improves. When the length of each wire spoke **30** is 60% or more of the rim diameter, a sufficiently high shock absorption can be obtained. As used herein, the rim diameter is the nominal diameter of the rim as specified in various industrial standards.

Now, the fact that the configuration according to the present embodiment provides an increased energy absorption will be described more specifically. Herein, a comparison will be made between Example, which employs the configuration according to the present embodiment (i.e., the hub-end **30b** of each wire spoke **30** is connected to the hub **20** in the second region **R2** of the hub **20**), and Comparative Example, which does not employ the configuration according to the present embodiment (i.e., the hub-end **30b** of each wire spoke **30** is connected to the hub **20** in the first region **R1** of the hub **20**). The specifications of Example and Comparative Example are as indicated in Table 1 below.

**[Table 1]**

| | Comparative Example | Example |
|---|---|---|
| number of spokes | 32 | 32 |
| spoke diameter [mm] | 4.0 | 4.0 |
| spoke length [mm] | 200 | 300 |
| rim diameter [Inch] | 17 | 17 |
| (spoke length /rim diameter)× 100 [%] | 46 | 69 |

FIG. **8** is a graph showing a relationship (load-displacement curve) between the load acting on each wire spoke and the displacement of the wire spoke, with respect to Example and Comparative Example. The area of the region enclosed by each load-displacement curve corresponds to energy absorption. Herein, it is assumed that each wire spoke breaks (i.e., the load equals zero) at a certain load F.

The spoke length is different between Comparative Example and Example. Specifically, the spoke length in Comparative Example is 200 mm, whereas the spoke length in Example is 300 mm. As a result, in Example, when breaking occurs, a greater displacement is incurred (specifically, 1.5 times greater) than in Comparative Example. Accordingly, the energy absorption E2 in Example is 1.5 times greater than the energy absorption E1 in Comparative Example (i.e., E1:E2=1:1.5) .

Thus, by adopting the configuration where the hub-end (second end) **30b** of each wire spoke **30** is connected to the hub **20** in the second region **R2** of the hub **20,** energy absorption by the wire spokes **30** can be increased and shock absorption can be improved.

As illustrated in the present embodiment, given the structure of the hub **20** which includes the inner cylindrical portion **21** and the outer cylindrical portion **22** (hollow structure), adopting the configuration where each wire spoke **30** penetrates the interior of the hub **20** from a portion (spoke introduction site **22a**) to another portion (spoke connection site **22b**) of the outer cylindrical portion **22** of the hub **20** allows the hub-end **30b** of the wire spoke **30** to be connected to the hub **30** in the second region **R2.**

Moreover, when the hub-ends **30b** of the wire spokes **30** are fastened to the hub **20** via nipples **40** as in the present embodiment, it is preferable from a design standpoint that (as shown in FIG. **2**), in a plan view as viewed along the wheel axis direction **D1,** the nipples **40** (or more specifically, the heads **42** of the nipples **40**) do not protrude outward along the wheel radius direction **D2** from the outer cylindrical portion **22** of the hub **20** (i.e., they are not to be seen).

Although the present embodiment illustrates an example where the grooves **22e** and **22f** are formed in the outer peripheral surface of the outer cylindrical portion **22** of the hub **20,** the groove **22e** and/or the groove **22f** may not be formed in the outer peripheral surface of the outer cylindrical portion **22.**

### (Embodiment 2)

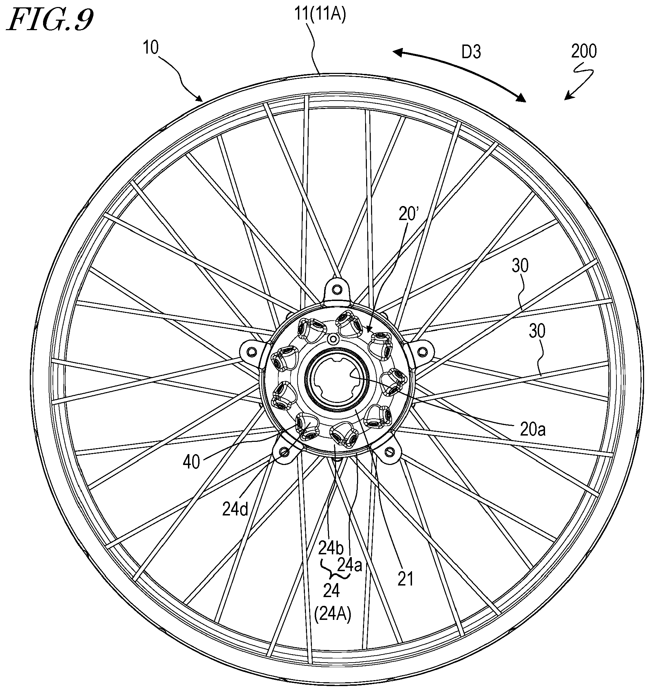

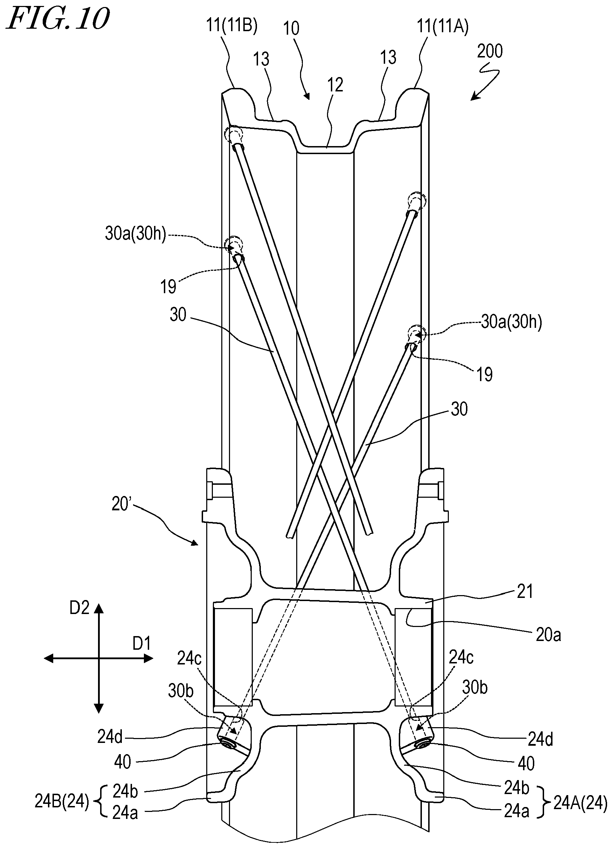

With reference to FIG. **9** and FIG. **10****,** a wheel **200** according to the present embodiment will be described. FIG. **9** is a side view schematically showing the wheel **200.** FIG. **10** is a cross-sectional view schematically showing the wheel **200,** illustrating a cross section that is parallel to the wheel axis direction **D1** and the wheel radius direction **D2.**

As shown in FIG. **9** and FIG. **10****,** the wheel **200** includes a rim **10,** a hub **20',** and a plurality of wire spokes **30.**

The hub **20'** of the wheel **200** according to the present embodiment lacks the hollow structure of the hub **20** of the wheel **100** according to Embodiment 1. The hub **20'** includes an inner cylindrical portion **21** and a pair of flange portions **24.**

The inner cylindrical portion **21** is a barrel-shaped portion defining a wheel-shaft insertion hole **20a.** The pair of flange portions **24** are portions extending outward along the wheel radius direction **D2** from the inner cylindrical portion **21.** The pair of flange portions **24** include a right flange portion **24A** located on the right side and a left flange portion **24B** located on the left side. Each of the right flange portion **24A** and the left flange portion **24B** includes a subportion (hereinafter referred to as the "outer peripheral subportion") **24a** defining the outer periphery of the flange portion **24** and a subportion (hereinafter referred to as the "inner subportion") **24b** located inward of the outer peripheral subportion **24a** along the wheel radius direction **D2,** and presents a dish shape in the illustrated example.

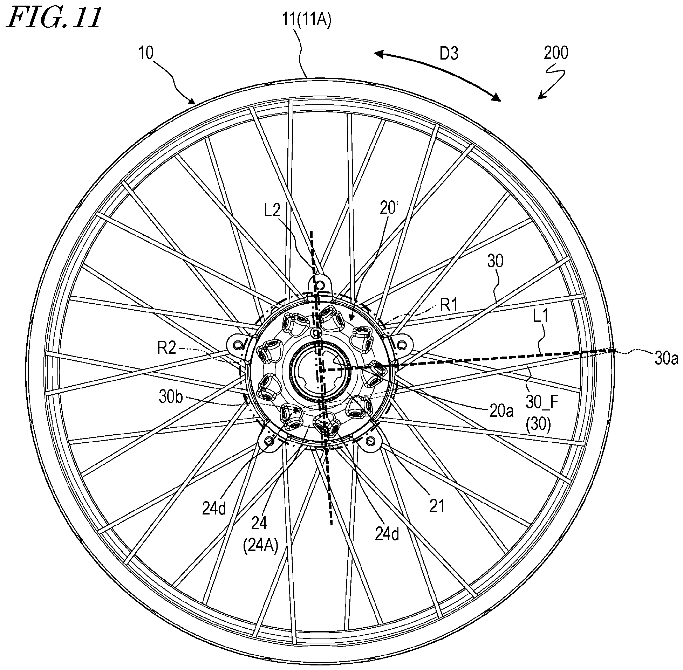

Similarly to the wheel **100** according to Embodiment 1, the wheel **200** according to the present embodiment has a configuration that allows the wire spokes **30** to be longer than conventional. FIG. **11** shows a side of the wheel **200** in a plan view drawn with particular attention to a certain wire spoke **30** (i.e., a wire spoke denoted as **"30_F"** in FIG. **11**).

As has been described with respect to the wheel **100** according to Embodiment 1, the following is assumed: an imaginary line **L1** connecting the rim-end **30a** of the wire spoke **30** and the center of the wheel-shaft insertion hole **20a** defines a "first imaginary line"; an imaginary line **L2** being orthogonal to the first imaginary line **L1** and passing through the center of the wheel-shaft insertion hole **20a** defines a "second imaginary line"; and the second imaginary line **L2** divides the hub **20'** into two regions **R1** and **R2.** It is further assumed that one **R1** of the two regions **R1** and **R2** that is located closer to the rim-end **30a** of the wire spoke **30** of interest defines a "first region" and that the other region **R2** defines a "second region".

As shown in FIG. **11****,** in the wheel **200** according to the present embodiment, too, the hub-end **30b** of each wire spoke **30** is connected to the hub **20'** in the second region **R2** of the hub **20'.** More specifically, the hub-end **30b** of each wire spoke **30** is connected to the hub **20'** at the inner subportion **24b** of the flange portion **24.**

At the inner subportion **24b** of each flange portion **24,** as shown in FIG. **10****,** bosses **24d** each having a nipple hole **24c** through which the stem **41** of the corresponding nipple **40** is inserted are formed, such that the hub-ends **30b** of the wire spokes **30** are fastened to the flange portions **24** of the hub **20** via the nipples **40.**

When viewed in a plan view from the wheel axis direction **D1,** each wire spoke **30** extends from its rim-end **30a** to its hub-end **30b,** so as to pass inward of the hub-end **30b** of at least another wire spoke **30** (i.e., inward along the wheel radius direction **D2**). For example, the wire spoke **30_F** of particular interest in FIG. **11** extends so as to pass inward of another boss **24d** (i.e., a boss **24d** located at the boundary between the first region **R1** and the second region **R2**) that is located to the right of the boss **24d** to which the hub-end **30b** of the wire spoke **30_F** is connected.

A half of the plurality of wire spokes **30** have their rim-ends **30a** connected to the right flange portion **11A** of the rim **10** and their hub-ends **30b** connected to the left flange portion **24B** of the hub **20'.** The other half of the wire spokes **30** have their rim-ends **30a** connected to the left flange portion **11B** of the rim **10** and their hub-ends **30b** connected to the right flange portion **24A** of the hub **20'.**

As described above, in the wheel **200** according to the present embodiment, too, the hub-end **30b** of each wire spoke **30** is connected to the hub **20'** in the second region **R2** of the hub **20'.** In other words, each wire spoke **30** is disposed so as to extend from the rim **10** to the hub **20'** and beyond the second imaginary line **L2.** Thus, the wire spokes **30** can be made longer than conventional, whereby energy absorption by the wire spokes **30** increases, thus resulting in an improved shock absorption. Therefore, a straddled vehicle including the wheel **200** according to the present embodiment provides better riding comfort on poor terrain and uneven road surfaces. As energy absorption increases, the input occurring at the fastening site of each wire spoke **30** decreases, which reduces loosening of the fastening site and reduces the frequency of maintenance.

As illustrated in the present embodiment, given the structure of the hub **20'** which includes the inner cylindrical portion **21** and the pair of flange portions **24,** adopting the configuration where, e.g., the hub-end **30b** of each wire spoke **30** is connected to the hub **20'** at the inner subportion **24b** of the flange portion **24** allows the hub-end **30b** of the wire spoke **30** to be connected to the hub **20'** in the second region **R2.**

As described above, a wire-spoke wheel **100, 200** according to an embodiment of the present invention includes: an annular rim **10;** a hub **20, 20'** having a hole **20a** in which a wheel shaft is inserted; and a plurality of wire spokes **30** linking the rim **10** and the hub **20, 20'** together, the plurality of wire spokes **30** each including a first end **30a** that is connected to the rim **10** and a second end **30b** that is connected to the hub **20, 20'.** In a plan view as viewed along the wheel axis direction **D1,** regarding each wire spoke **30,** an imaginary line **L1** connecting the first end **30a** of the wire spoke **30** and a center of the hole **20a** defines a first imaginary line; an imaginary line **L2** being orthogonal to the first imaginary line **L1** and passing through a center of the hole 20a defines a second imaginary line; and when the hub **20, 20'** is divided into two regions **R1** and **R2** by the second imaginary line **L2,** one **R1** of the two regions **R1** and **R2** that is located closer to the first end **30a** of the wire spoke **30** defines a first region and the other **R2** of the two regions **R1** and **R2** defines a second region, wherein the second end **30b** of the wire spoke **30** is connected to the hub **20, 20'** in the second region **R2** of the hub **20, 20'**.

A wire-spoke wheel **100, 200** according to an embodiment of the present invention has a configuration that allows the wire spokes **30** to be longer than conventional. Specifically, in a plan view as viewed along the wheel axis direction **D1,** the following may be assumed regarding each wire spoke **30:** an imaginary line **L1** connecting the rim-end (first end) **30a** of the wire spoke **30** and the center of the hole (wheel-shaft insertion hole) **20a** in the hub **20, 20'** defines a first imaginary line; an imaginary line **L2** being orthogonal to the first imaginary line **L1** and passing through the center of the hole **20a** defines a second imaginary line; and the second imaginary line **L2** divides the hub **20, 20'** into two regions **R1, R2.** Herein, assuming that one **R1** of the two regions **R1** and **R2** that is located closer to the first end **30a** of the wire spoke **30** defines a first region and that the other region **R2** defines a second region, the hub-end (second end) **30b** of the wire spoke **30** is connected to the hub **20, 20'** in the second region **R2** of the hub **20, 20'.**

Because of the wire-spoke wheel **100, 200** having such a configuration (i.e., each wire spoke **30** is disposed so as to extend from the rim **10** to the hub **20, 20'** and beyond the second imaginary line **L2**), the wire spokes **30** can be made longer than conventional, whereby energy absorption by the wire spokes **30** increases, thus resulting in an improved shock absorption. Therefore, a straddled vehicle including a wire-spoke wheel **100, 200** according to an embodiment of the present invention provides better riding comfort on poor terrain and uneven road surfaces. As energy absorption increases, the input occurring at the fastening site of each wire spoke **30** decreases, which reduces loosening of the fastening site and reduces the frequency of maintenance.

In one embodiment, each of the plurality of wire spokes **30** has a length which is 60% or more of the rim diameter.

When the length of each wire spoke **30** is 60% or more of the rim diameter, a sufficiently high shock absorption can be obtained.

In one embodiment, the hub **20** includes an inner cylindrical portion **21** defining the hole **20a,** an outer cylindrical portion **22** being located outward of the inner cylindrical portion **21** along the wheel radius direction **D2** and surrounding the inner cylindrical portion **21,** and an interconnecting portion **23** connecting the inner cylindrical portion **21** and the outer cylindrical portion **22.**

In one embodiment, each of the plurality of wire spokes **30** penetrates the interior of the hub **20** from a portion **22a** to another portion **22b** of the outer cylindrical portion **22** of the hub **20,** and the second end **30b** is connected to the hub **20** at the other portion **22b.**

Given the structure of the hub **20** which includes the inner cylindrical portion **21** and the outer cylindrical portion **22,** adopting the configuration where, e.g., each wire spoke **30** penetrates the interior of the hub **20** from a portion **22a** to another portion **22b** of the outer cylindrical portion **22** of the hub **20** allows the hub-end (second end) **30b** of the wire spoke **30** to be connected to the hub **20** in the second region **R2.**

In one embodiment, an opening **22o** is made in the portion **22a** of the outer cylindrical portion **22** of the hub **20,** and the first end **30a** of each wire spoke **30** is located outward of the opening **22o** along the wheel axis direction **D1.**

In one embodiment, the wire-spoke wheel **100** further includes a plurality of nipples **40** to fasten the respective second ends **30b** of the plurality of wire spokes **30** to the hub **20.** In a plan view as viewed along the wheel axis direction **D1,** the plurality of nipples **40** do not protrude from the outer cylindrical portion **22** of the hub **20.**

When the second ends **30b** of the wire spokes **30** are fastened to the hub **20** via nipples **40,** it is preferable from a design standpoint that, in a plan view as viewed along the wheel axis direction **D1,** the nipples **40** do not protrude from the outer cylindrical portion **22** of the hub **20.**

In one embodiment, the hub **20'** includes an inner cylindrical portion **21** defining the hole **20a** and a pair of flange portions **24** extending outward along the wheel radius direction **D2** from the inner cylindrical portion **21.**

In one embodiment, each of the pair of flange portions **24** includes an outer peripheral subportion **24a,** and an inner subportion **24b** that is located inward of the outer peripheral subportion **24a** along the wheel radius direction **D2;** and the second end **30b** of each of the plurality of wire spokes **30** is connected to the hub **20'** in the inner subportion **24b** of the pair of flange portions **24.**

Given the structure of the hub **20'** which includes the inner cylindrical portion **21** and the pair of flange portions **24**, adopting the configuration where, e.g., the second end **30b** of each wire spoke **30** is connected to the hub **20'** at the inner subportion **24b** of the flange portion **24** allows the hub-end (second end) **30b** of the wire spoke **30** to be connected to the hub **20'** in the second region **R2.**

In one embodiment, when viewed in a plan view from the wheel axis direction **D1,** each wire spoke **30** extends from the first end **30a** to the second end **30b** thereof, so as to pass inward of the second end **30b** of at least another wire spoke **30** along the wheel radius direction **D2.**

According to an embodiment of the present invention, shock absorption of a wire-spoke wheel can be improved. A wire-spoke wheel according to an embodiment of the present invention can be suitably used for various straddled vehicles such as motorcycles.

## Claims

1. A wire-spoke wheel (100) comprising:
an annular rim (10);
a hub (20, 20') having a hole (20a) in which a wheel shaft is inserted;
a plurality of wire spokes (30) linking the rim (10) and the hub (20, 20') together, the plurality of wire spokes (30) each including a first end (30a) that is connected to the rim (10) and a second end (30b) that is connected to the hub (20, 20'), wherein,
in a plan view as viewed along a wheel axis direction (D1), regarding each wire spoke (30),
an imaginary line (L1) connecting the first end (30a) of the wire spoke (30) and a center of the hole (20a) defines a first imaginary line (L1); an imaginary line (L2) being orthogonal to the first imaginary line (L1) and passing through a center of the hole (20a) defines a second imaginary line (L2); and when the hub (20, 20') is divided into two regions (R1, R2) by the second imaginary line (L2), one (R1) of the two regions (R1, R2) that is located closer to the first end (30a) of the wire spoke (30) defines a first region (R1) and the other (R2) of the two regions (R1, R2) defines a second region (R2), wherein
the second end (30b) of the wire spoke (30) is connected to the hub (20, 20') in the second region (R2) of the hub (20, 20').

2. The wire-spoke wheel of claim 1, wherein each of the plurality of wire spokes (30) has a length which is 60% or more of the rim diameter.

3. The wire-spoke wheel of claim 1 or 2, wherein,
the hub (20) includes an inner cylindrical portion (21) defining the hole (20a), an outer cylindrical portion (22) being located outward of the inner cylindrical portion (21) along a wheel radius direction (D2) and surrounding the inner cylindrical portion (21), and an interconnecting portion (23) connecting the inner cylindrical portion (21) and the outer cylindrical portion (22).

4. The wire-spoke wheel of claim 3, wherein,
each of the plurality of wire spokes (30) penetrates an interior of the hub (20) from a portion (22a) to another portion (22b) of the outer cylindrical portion (22) of the hub (20), and the second end (30b) is connected to the hub (20) at the other portion.

5. The wire-spoke wheel of claim 4, wherein an opening (22o) is made in the portion of the outer cylindrical portion (22) of the hub (20), and the first end (30a) of each wire spoke (30) is located outward of the opening (22o) along the wheel axis direction (D1).

6. The wire-spoke wheel of claim 4 or 5, further comprising a plurality of nipples (40) to fasten the respective second ends (30b) of the plurality of wire spokes (30) to the hub (20), wherein,
in a plan view as viewed along the wheel axis direction (D1), the plurality of nipples (40) do not protrude from the outer cylindrical portion (22) of the hub (30).

7. The wire-spoke wheel of claim 1 or 2, wherein,
the hub (30) includes an inner cylindrical portion (21) defining the hole (20a) and a pair of flange portions (24) extending outward along a wheel radius direction (D2) from the inner cylindrical portion (21).

8. The wire-spoke wheel of claim 7, wherein,
each of the pair of flange portions (24) includes an outer peripheral subportion (24a), and an inner subportion (24b) that is located inward of the outer peripheral subportion (24a) along the wheel radius direction (D2); and
the second end (30b) of each of the plurality of wire spokes (30) is connected to the hub (20) in the inner subportion (24b) of the pair of flange portions (234).

9. The wire-spoke wheel of claim 8, wherein, when viewed in a plan view from the wheel axis direction (D1), each wire spoke (30) extends from the first end (30a) to the second end (30b) thereof, so as to pass inward of the second end (30b) of at least another wire spoke (30) along the wheel radius direction (D2) .

## Patentansprüche

1. Drahtspeichenrad (100), umfassend:
eine ringförmige Felge (10),
eine Nabe (20, 20') mit einem Loch (20a), in die eine Radwelle eingesteckt wird,
eine Vielzahl von Drahtspeichen (30), die die Felge (10) und die Nabe (20, 20`) miteinander verbinden, wobei die Vielzahl von Drahtspeichen (30) jeweils ein erstes Ende (30a), das mit der Felge (10) verbunden ist, und ein zweites Ende (30b), das mit der Nabe (20, 20`) verbunden ist, umfasst,
wobei, in einer Draufsicht entlang einer Radachsenrichtung (D1) gesehen, für jede Drahtspeiche (30) gilt: eine imaginäre Linie (L1), die das erste Ende (30a) der Drahtspeiche (30) mit einer Mitte des Lochs (20a) verbindet, definiert eine erste imaginäre Linie (L1); eine imaginäre Linie (L2), die orthogonal zu der ersten imaginären Linie (L1) ist und durch die Mitte des Lochs (20a) verläuft, definiert eine zweite imaginäre Linie (L2); und wenn die Nabe (20, 20`) durch die imaginäre Linie (L2) in zwei Bereiche (R1, R2) geteilt wird, definiert einer (R1) der zwei Bereiche (R1, R2), der näher an dem ersten Ende (30a) der Drahtspeiche (30) angeordnet ist, einen ersten Bereich (R1) und definiert der andere (R2) der zwei Bereiche (R1, R2) einen zweiten Bereich (R2),
wobei das zweite Ende (30b) der Drahtspeiche (30) mit der Nabe (20, 20`) in dem zweiten Bereich (R2) der Nabe (20, 20`) verbunden ist.

2. Drahtspeichenrad nach Anspruch 1, wobei jede aus der Vielzahl von Drahtspeichen (30) eine Länge aufweist, die 60% oder mehr des Felgendurchmessers ausmacht.

3. Drahtspeichenrad nach Anspruch 1 oder 2, wobei:
die Nabe (20) einen inneren zylindrischen Teil (21), der das Loch (20a) definiert, einen äußeren zylindrischen Teil (22), der außerhalb des inneren zylindrischen Teils (21) entlang einer Radradiusrichtung (D2) angeordnet ist und den inneren zylindrischen Teil (21) umgibt, und einen Verbindungsteil (23), der den inneren zylindrischen Teil (21) und den äußeren zylindrischen Teil (22) verbindet, umfasst.

4. Drahtspeichenrad nach Anspruch 3, wobei:
sich jede aus der Vielzahl von Drahtspeichen (30) in das Innere der Nabe (20) von einem Teil (22a) zu einem anderen Teil (22b) des äußeren zylindrischen Teils (22) der Nabe (20) erstreckt und das zweite Ende (30b) mit der Nabe (20) an dem anderen Teil verbunden ist.

5. Drahtspeichenrad nach Anspruch 4, wobei eine Öffnung (22o) in dem Teil des äußeren zylindrischen Teils (22) der Nabe (20) ausgebildet ist und das erste Ende (30a) jeder Radspeiche (30) außerhalb der Öffnung (22o) entlang der Radachsenrichtung (D1) angeordnet ist.

6. Drahtspeichenrad nach Anspruch 4 oder 5, das weiterhin eine Vielzahl von Nippeln (40) für das Befestigen der entsprechenden zweiten Enden (30b) der Vielzahl von Drahtspeichen (30) an der Nabe (20) umfasst,
wobei, in einer Draufsicht entlang der Radachsenrichtung (D1) gesehen, die Vielzahl von Nippeln (40) nicht von dem äußeren zylindrischen Teil (22) der Nabe (30) vorstehen.

7. Drahtspeichenrad nach Anspruch 1 oder 2, wobei:
die Nabe (30) einen inneren zylindrischen Teil (21), der das Loch (20a) definiert, und ein Paar von Flanschteilen (24), die sich nach außen entlang einer Radradiusrichtung (D2) von dem inneren zylindrischen Teil (21) erstrecken, umfasst.

8. Drahtspeichenrad nach Anspruch 7, wobei:
jeder aus dem Paar von Flanschteilen (24) einen Außenumfangsunterteil (24a) und einen inneren Unterteil (24b), der innerhalb des Außenumfangsunterteils (24a) entlang der Radradiusrichtung (D2) angeordnet ist, umfasst, und
das zweite Ende (30b) jeder aus der Vielzahl von Drahtspeichen (30) mit der Nabe (20) in dem inneren Unterteil (24b) des Paars von Flanschteilen (24) verbunden ist.

9. Drahtspeichenrad nach Anspruch 8, wobei, in einer Draufsicht von der Radachsenrichtung (D1) gesehen, sich jede Drahtspeiche (30) von dem ersten Ende (30a) zu dem zweiten Ende (30b) und zu innerhalb des zweiten Endes (30b) wenigstens einer anderen Drahtspeiche (30) entlang der Radradiusrichtung (D2) erstreckt.

## Revendications

1. Roue à rayons filaires (100) comprenant :
une jante annulaire (10) ;
un moyeu (20, 20') présentant un trou (20a) dans lequel un arbre de roue est inséré ;
une pluralité de rayons filaires (30) reliant ensemble la jante (10) au moyeu (20, 20'), la pluralité de rayons filaires (30) incluant chacun une première extrémité (30a) qui est reliée à la jante (10) et une deuxième extrémité (30b) qui est reliée au moyeu (20, 20'), dans laquelle,
dans une vue en plan telle que visualisée le long d'une direction d'axe de roue (D1), concernant chaque rayon filaire (30),
une ligne imaginaire (L1) reliant la première extrémité (30a) du rayon filaire (30) et un centre du trou (20a) définit une première ligne imaginaire (L1) ; une ligne imaginaire (L2) étant orthogonale à la première ligne imaginaire (L1) et passant à travers un centre du trou (20a) définit une deuxième ligne imaginaire (L2) ; et
lorsque le moyeu (20, 20') est divisé en deux zones (R1, R2) par la deuxième ligne imaginaire (L2), une (R1) des deux zones (R1, R2) qui est située plus à proximité de la première extrémité (30a) du rayon filaire (30) définit une première zone (R1) et l'autre (R2) des deux zones (R1, R2) définit une deuxième zone (R2), dans laquelle
la deuxième extrémité (30b) du rayon filaire (30) est reliée au moyeu (20, 20') dans la deuxième zone (R2) du moyeu (20, 20').

2. La roue à rayons filaires de la revendication 1, dans laquelle chacun de la pluralité de rayons filaires (30) présente une longueur qui correspond à 60 % ou plus du diamètre.

3. La roue à rayons filaires de la revendication 1 ou 2, dans laquelle,
le moyeu (20) inclut une partie cylindrique intérieure (21) définissant le trou (20a), une partie cylindrique extérieure (22) étant située à l'extérieur de la partie cylindrique intérieure (21) le long d'une direction de rayon de roue (D2) et entourant la partie cylindrique intérieure (21), et une partie d'interconnexion (23) reliant la partie cylindrique intérieure (21) et la partie cylindrique extérieure (22).

4. La roue à rayons filaires de la revendication 3, dans laquelle,
chacune de la pluralité de rayons filaires (30) pénètre un intérieur du moyeu (20) depuis une partie (22a) vers une autre partie (22b) de la partie cylindrique extérieure (22) du moyeu (20), et la deuxième extrémité (30b) est reliée au moyeu (20) au niveau de l'autre partie.

5. La roue à rayons filaires de la revendication 4, dans laquelle une ouverture (220) est constituée dans la partie de la partie cylindrique extérieure (22) du moyeu (20), et la première extrémité (30a) de chaque rayon filaire (30) est située à l'extérieur de l'ouverture (220) le long de la direction d'axe de roue (D1).

6. La roue à rayons filaires de la revendication 4 ou 5, comprenant en outre une pluralité d'embouts de rayon (40) pour fixer les deuxièmes extrémités respectives (30b) de la pluralité de rayons filaires (30) au moyeu (20), dans laquelle,
dans une vue en plan telle que visualisée le long de la direction d'axe de roue (D1), la pluralité d'embouts de rayon (40) ne déborde pas de la partie cylindrique extérieure (22) du moyeu (30).

7. La roue à rayons filaires de la revendication 1 ou 2, dans laquelle,
le moyeu (30) inclut une partie cylindrique intérieure (21) définissant le trou (20a) et une paire de parties de bride (24) s'étendant vers l'extérieur le long d'une direction de rayon de roue (D2) depuis la partie cylindrique intérieure (21).

8. La roue à rayons filaires de la revendication 7, dans laquelle,
chacune de la paire de parties de bride (24) inclut une sous-partie périphérique extérieure (24a), et une sous-partie intérieure (24b) qui est située à l'intérieur de la sous-partie périphérique extérieure (24a) le long de la direction de rayon de roue (D2) ; et
la deuxième extrémité (30b) de chacune de la pluralité de rayons filaires (30) est connectée au moyeu (20) dans la sous-partie intérieure (24b) de la paire de parties de bride (234).

9. La roue à rayons filaires de la revendication 8, dans laquelle, lorsque visualisé dans une vue en plan depuis la direction d'axe de roue (D1), chaque rayon filaire (30) s'étend depuis la première extrémité (30a) à la deuxième extrémité (30b) de celui-ci, de sorte à passer à l'intérieur de la deuxième extrémité (30b) d'au moins un autre rayon filaire (30) le long de la direction de rayon de roue (D2).
